# EUROPEAN PATENT APPLICATION

(11) **EP 4 782 509 A1**
(43) Date of publication of application: **29.07.2026**
(21) Application number: 25224825.7
(22) Date of filing: 18.12.2025
(51) Int. Cl.: C09D 183/04, G03G 15/20

(54) **FILM, MEMBER, FIXING DEVICE, IMAGE FORMING APPARATUS, AND METHOD OF FORMING FILM**

(30) Priority: 24.01.2025 JP 2025010966; 08.10.2025 JP 2025170440
(71) Applicant: FUJIFILM Business Innovation Corp., Minato-ku Tokyo (JP)
(72) Inventor: NAGAMATSU, Taiki, Ebina-shi, Kanagawa (JP); YOSHIKAWA, Ryohei, Ebina-shi, Kanagawa (JP); INAGAKI, Tomotake, Ebina-shi, Kanagawa (JP); KOMURO, Hitoshi, Ebina-shi, Kanagawa (JP); KINUTA, Yasuhiko, Ebina-shi, Kanagawa (JP); KIMURA, Jun, Ebina-shi, Kanagawa (JP); SEKO, Masayuki, Ebina-shi, Kanagawa (JP); NISHIMURA, Iori, Ebina-shi, Kanagawa (JP); KUBOTA, Ryosuke, Ebina-shi, Kanagawa (JP); MATSUMOTO, Koichi, Ebina-shi, Kanagawa (JP)
(74) Representative: Becker Kurig & Partner Patentanwälte mbB

(57) **Abstract**

A film contains a conductive material, and a polysiloxane compound that has a T unit represented by a formula: [R¹SiO_{3/2}]ₘ (in the formula, R¹ represents an organic group, m represents an integer of 2 or more, and at least one R¹ among a plurality of R¹'s present in the T unit is a group including at least one of an alkyl group or an aryl group), in which a surface resistivity is 1.0 × 10³ Ω/sq or more and 1.0 × 10⁸ Q/sq or less.

## Description

### BACKGROUND OF THE INVENTION

### (i) Field of the Invention

The present invention relates to a film, a member, a fixing device, an image forming apparatus, and a method of forming a film.

### (ii) Description of Related Art

In an image forming apparatus (such as a copy machine, a facsimile machine, and a printer) using an electrophotographic method, a toner image formed on a surface of an image holder is transferred to the surface of a recording medium and fixed on the recording medium such that an image is formed.

For example, JP1996-262899A discloses "fixing device including a roller that has a three-layer structure in which a base layer, an oil-resistant layer, and a silicone-based release layer are laminated in this order on a core metal".

JP1995-160135A discloses "thermal fixing device including a heating body and a film that has one surface in contact with the heating body and the other surface in contact with a recording material supporting an image, the film being movable, in which a release layer of the film, that is in contact with a toner, is composed of a polybenzimidazole resin coating layer".

### SUMMARY OF THE INVENTION

An object of the present invention is to provide a film containing a conductive material and a polysiloxane compound having a T unit represented by the following formula: [R¹SiO_{3/2}]ₘ, in which the film has low electrostatic adhesiveness and low physical adhesiveness as compared with a case where a surface resistivity is less than 1.0 × 10³ Ω/sq or more than 1.0 × 10⁸ Ω/sq.

Methods for achieving the above object include the following aspects.
<1> According to a first aspect of the present disclosure, there is provided a film containing:
   a conductive material; and
   a polysiloxane compound that has a T unit represented by a formula: [R¹SiO_{3/2}]ₘ (in the formula, R¹ represents an organic group, m represents an integer of 2 or more, and at least one R¹ among a plurality of R¹'s present in the T unit is a group including at least one of an alkyl group or an aryl group),
   in which a surface resistivity is 1.0 × 10³ Ω/sq or more and 1.0 × 10⁸ Ω/sq or less.
<2> According to a second aspect of the present disclosure, there is provided the film according to <1>, in which a water contact angle of a surface may be 90° or more.
<3> According to a third aspect of the present disclosure, there is provided the film according to <1> or <2>, in which the conductive material may be at least one selected from the group consisting of carbon black, an ion conductive material, and graphite.
<4> According to a fourth aspect of the present disclosure, there is provided the film according to <3>,
   in which the conductive material may be the carbon black, and
   a content of the carbon black with respect to the polysiloxane compound may be 0.5% by mass or more and 30% by mass or less.
<5> According to a fifth aspect of the present disclosure, there is provided the film according to <3> or <4>, in which the conductive material may be carbon black having a pH of 6.0 or more and 10.0 or less.
<6> According to a sixth aspect of the present disclosure, there is provided a member including: a resin base material; and a surface layer that is provided on the resin base material and consists of the film according to any one of <1> to <5>.
<7> According to a seventh aspect of the present disclosure, there is provided a fixing device including:
   a heating member; and
   a pressurizing member disposed in contact with an outer surface of the heating member,
   in which the pressurizing member is configured by an endless belt consisting of the member according to <6>.
<8> According to an eighth aspect of the present disclosure, there is provided an image forming apparatus including:
   an image holder;
   a charging device that charges a surface of the image holder;
   an electrostatic latent image forming device that forms an electrostatic latent image on the charged surface of the image holder;
   a developing device that accommodates a developer containing a toner and develops the electrostatic latent image formed on the surface of the image holder with the developer to form a toner image;
   a transfer device that transfers the toner image onto a surface of a recording medium; and
   the fixing device according to <7>, that fixes the toner image on the surface of the recording medium.
<9> According to a ninth aspect of the present disclosure, there is provided a method of forming the film according to any one of <1> to <5>,
   in which the film is formed by a blade coating method.
<10> According to a tenth aspect of the present disclosure, there is provided a method of forming the film according to any one of <1> to <5>,
   in which the film is formed by a dip coating method.
<11> According to an eleventh aspect of the present disclosure, there is provided a method of forming the film according to any one of <1> to <5>,
   in which the film is formed by a spray coating method.
<12> According to a twelfth aspect of the present disclosure, there is provided a method of forming the film according to any one of <1> to <5>,
   in which the film is formed by a ring coating method.
<13> According to a thirteenth aspect of the present disclosure, there is provided a method of forming the film according to any one of <1> to <5>,
   in which the film is formed by a brush coating method.

According to <1>, there is provided a film that has low electrostatic adhesiveness and low physical adhesiveness as compared with a case where, in the film containing a conductive material and a polysiloxane compound having a T unit represented by the above formula: [R¹SiO_{3/2}]ₘ, the surface resistivity is less than 1.0 × 10³ Ω/sq or more than 1.0 × 10⁸ Ω/sq.

According to <2>, there is provided a film that has low electrostatic adhesiveness and low physical adhesiveness as compared with a case where the water contact angle of the surface is less than 90°.

According to <3>, there is provided a film containing, as the conductive material, at least one selected from the group consisting of carbon black, an ion conductive material, and graphite, in which the film has low electrostatic adhesiveness and low physical adhesiveness as compared with a case where a surface resistivity is less than 1.0 × 10³ Ω/sq or more than 1.0 × 10⁸ Ω/sq.

According to <4>, there is provided a film that has low electrostatic adhesiveness and low physical adhesiveness as compared with a case where the content of the carbon black with respect to the polysiloxane compound is less than 0.5% by mass or more than 30% by mass.

According to <5>, there is provided a film that has low electrostatic adhesiveness and low physical adhesiveness as compared with a case where the conductive material is an ion conductive material or graphite.

According to <6>, there is provided a member that employs a film containing a conductive material and a polysiloxane compound having a T unit represented by the above formula: [R¹SiO_{3/2}]ₘ, in which the film has low electrostatic adhesiveness and low physical adhesiveness as compared with a case where the surface resistivity is less than 1.0 × 10³ Ω/sq or more than 1.0 × 10⁸ Ω/sq.

According to <7> or <8>, there is provided a fixing device or an image forming apparatus, that can suppress electrostatic offset and contamination of a back surface of a recording medium when a film containing a conductive material and a polysiloxane compound having a T unit represented by the above formula: [R¹SiO_{3/2}]ₘ is employed, in which the film has low electrostatic adhesiveness and low physical adhesiveness as compared with a case where the surface resistivity is less than 1.0 ×10³ Ω/sq or more than 1.0 × 10⁸ Ω/sq.

According to <9>, <10>, <11>, <12>, or <13>, there is provided a method of forming a film having low electrostatic adhesiveness and low physical adhesiveness and reducing coating defects by a blade coating method, a dip coating method, a spray coating method, a ring coating method, or a brush coating method.

### BRIEF DESCRIPTION OF THE DRAWINGS

Exemplary embodiment(s) of the present invention will be described in detail based on the following figures, wherein:
FIG. 1 is a view schematically showing a configuration of an example of a fixing device according to the present exemplary embodiment; and
FIG. 2 is a view schematically showing a configuration of an example of an image forming apparatus according to the present exemplary embodiment.

### DETAILED DESCRIPTION OF THE INVENTION

Hereinafter, present exemplary embodiments of the present invention will be described. The following descriptions and examples merely illustrate the exemplary embodiments, and do not limit the scope of the exemplary embodiments.

Regarding the numerical ranges described in stages in the present exemplary embodiment, the upper limit value or lower limit value of a numerical range may be replaced with the upper limit value or lower limit value of another numerical range described in stages. In addition, in the present exemplary embodiment, the upper limit value or lower limit value of a numerical range may be replaced with values described in examples.

In the present exemplary embodiments, the term "step" includes not only an independent step but a step which is not clearly distinguished from other steps as long as the intended purpose of the step is achieved.

In the present exemplary embodiment, in a case where an exemplary embodiment is described with reference to drawings, the configuration of the exemplary embodiment is not limited to the configuration shown in the drawings. In addition, the sizes of members in each drawing are conceptual and do not limit the relative relationship between the sizes of the members.

In the present exemplary embodiments, each component may include a plurality of corresponding substances. In the present exemplary embodiment, in a case where the amount of each component in a composition is mentioned, and there are two or more kinds of substances corresponding to each component in the composition, unless otherwise specified, the amount of each component means the total amount of two or more kinds of the substances present in the composition.

### <Film>

The film according to the present exemplary embodiment contains a conductive material and a polysiloxane compound (hereinafter, also referred to as "polysiloxane compound SQ").

A surface resistivity of the film according to the present exemplary embodiment is 1.0 × 10³ Ω/sq or more and 1.0 × 10⁸ Ω/sq or less.

The polysiloxane compound SQ is a polysiloxane compound having a T unit represented by a formula: [R¹SiO_{3/2}]ₘ (in the formula, R¹ represents an organic group, m represents an integer of 2 or more, and at least one R¹ among a plurality of R¹'s present in the T unit is a group including at least one of an alkyl group or an aryl group).

Here, the "film" refers to a thin film body having a film thickness of 1 mm or less.

In recent years, due to increased awareness of sustainable development goals (SDGs), the developments of materials with reduced environmental burden have been promoted. One of techniques is to use a polysiloxane compound.

However, a film containing the polysiloxane compound SQ can reduce physical adhesiveness, but electrostatic adhesiveness may be high due to, for example, frictional charging.

Therefore, in the film according to the present exemplary embodiment, the conductive material is contained together with the polysiloxane compound SQ, and the surface resistivity is set to the above-described range.

As a result, the film according to the present exemplary embodiment has low electrostatic adhesiveness and low physical adhesiveness.

Since the film according to the present exemplary embodiment has low physical adhesiveness, in a case where the film is applied to a fixing member (a heating member, a pressurizing member, or the like) of a fixing device, the fixing member has excellent release properties.

In particular, in a case where the film according to the present exemplary embodiment is applied to the fixing member, contamination of a recording medium is suppressed. Specifically, in a case where the film according to the present exemplary embodiment is applied to the heating member, contamination of an image forming surface of the recording medium is suppressed. In addition, in a case where the film according to the present exemplary embodiment is applied to the pressurizing member, contamination of a back surface of the recording medium is suppressed.

Since the film according to the present exemplary embodiment has low electrostatic adhesiveness, in a case where the film is applied to a fixing member (a heating member, a pressurizing member, or the like) of a fixing device, electrostatic offset is suppressed.

Here, the electrostatic offset refers to a phenomenon in which the fixing member is frictionally charged, a toner is electrostatically adhered to the fixing member, and the toner is adhered to the recording medium again.

Hereinafter, the film according to the present exemplary embodiment will be specifically described.

### [Surface Resistivity]

The surface resistivity of the film according to the present exemplary embodiment is 1.0 × 10³ Ω/sq or more and 1.0 × 10⁸ Ω/sq or less, and is, for example, preferably 5.0 × 10³ Ω/sq or more and 1.0 × 10⁸ Ω/sq or less, and more preferably 1.0 × 10⁴ Ω/sq or more and 1.0 × 10⁸ Ω/sq or less.

In a case where the surface resistivity of the film is less than 1.0 × 10³ Ω/sq, the electrostatic adhesiveness and the physical adhesiveness are high. In addition, another image defect (for example, toner scattering from a transfer unit) may occur.

In a case where the surface resistivity of the film is more than 1.0 × 10⁸ Ω/sq, the electrostatic adhesiveness is high.

The surface resistivity of the film is adjusted, for example, by the type and amount of the conductive material.

The surface resistivity of the film refers to a surface resistivity of a film-exposed surface in a state in which the film is disposed.

A method of measuring the surface resistivity of the film is as follows.

The surface resistivity of the film is measured by a micro current meter (R8430A manufactured by ADVANTEST CORPORATION) as a resistance measuring device, using a UR probe (manufactured by Mitsubishi Chemical Analytech Co., Ltd.) as a probe.

The surface resistivity is calculated from a current value after applying a voltage of 100 V for 10 seconds in an environment of 25°C and 55 %RH.

The surface resistivity is measured at three locations in a center portion of the film in a width direction, and an arithmetic average value thereof is used.

### [Water Contact Angle]

A water contact angle on a surface of the film according to the present exemplary embodiment is, for example, preferably 90° or more, more preferably 100° or more, and still more preferably 105° or more.

In a case where the water contact angle on the surface of the film is less than 90°, the electrostatic adhesiveness and the physical adhesiveness are high.

The water contact angle on the surface of the film is adjusted, for example, by the type and amount of the polysiloxane compound.

The water contact angle on the surface of the film refers to a water contact angle of the film-exposed surface in a state in which the film is disposed.

A method of measuring the water contact angle on the surface of the film is as follows.

In an environment of a temperature of 25°C and a humidity of 50%, 3 µl of pure water is dropped onto a surface of a measurement target object using a contact angle meter (manufactured by Kyowa Interface Science Co., Ltd., model number: CA-X-FACE), and the liquid droplet 3 seconds after the dropping is imaged with an optical microscope. A water contact angle θ is obtained based on a θ/2 method from the obtained captured image.

### [Formulation]

The film according to the present exemplary embodiment contains the conductive material and the polysiloxane compound SQ.

The film according to the present exemplary embodiment may be a film containing the polysiloxane compound SQ as a principal component (for example, a matrix material that is to be a binding material), or a film containing the polysiloxane compound as an additive. The film may contain other additives.

Here, the film containing the polysiloxane compound SQ as a principal component (for example, a matrix material that is to be a binding material) refers to a film having the highest amount of the polysiloxane compound.

### (Conductive Material)

Examples of the conductive material include an electronic conductive material and an ion conductive material.

Examples of the electronic conductive material include a carbon material, a conductive metal or an alloy, a conductive metal oxide, and particles of an insulating substance on which a surface is subjected to a conductive treatment with these materials.

Examples of the carbon material include carbon black, carbon nanotubes, carbon nanofibers, carbon fibers, graphite (natural graphite, artificial graphite, and the like), and fullerene.

Examples of the conductive metal or alloy include aluminum, copper, nickel, and stainless steel.

Examples of the conductive metal oxide include tin oxide, indium oxide, titanium oxide, a tin oxide-antimony oxide solid solution, and an indium oxide-tin oxide solid solution.

Examples of the ion conductive material include a perchlorate or a chlorate of onium compounds, a perchlorate or a chlorate of alkali metals, and a perchlorates or a chlorate of alkaline earth metals.

Examples of the perchlorate or chlorate of onium compounds include a perchlorate or a chlorate of tetraethylammonium, lauryltrimethylammonium, stearytrimethylammonium, octadodecyltrimethylammonium, dodecyltrimethylammonium, or the like.

Examples of the perchlorate or chlorate of alkali metals include a perchlorate or a chlorate of lithium or the like.

Examples of the perchlorate or chlorate of alkaline earth metals include a perchlorate or a chlorate of magnesium or the like.

Among these, as the conductive material, for example, at least one selected from the group consisting of carbon black, the ion conductive material, and graphite is preferable. In a case where these conductive materials are applied, the electrostatic adhesiveness and the physical adhesiveness are easily reduced.

In particular, from the viewpoint of reducing the electrostatic adhesiveness and the physical adhesiveness, as the conductive material, for example, carbon black is preferable.

Examples of the carbon black include Ketjen black, oil furnace black, channel black (that is, gas black), and acetylene black. As the carbon black, carbon black subjected to a surface treatment (hereinafter, also referred to as "surface-treated carbon black") may be used.

The surface-treated carbon black is obtained by adding, for example, a carboxy group, a quinone group, a lactone group, a hydroxy group, or the like to the surface of the carbon black. Examples of the surface treatment method include an air oxidation method of reacting the carbon black by bringing the carbon black into contact with air in a high temperature atmosphere, a method of reacting the carbon black with nitrogen oxide or ozone at room temperature (for example, 22°C), and a method of oxidizing the carbon black with air in a high temperature atmosphere and then with ozone at a low temperature.

Among these, as the carbon black, for example, carbon black having a pH of 6.0 or more and 10.0 or less is preferable. In a case where neutral or slightly basic carbon black is applied, a film can be formed in which the electrostatic adhesiveness and the physical adhesiveness can be reduced. This is because, in a case where acidic carbon having a pH of less than 6.0 is used, a silanol group in the polysiloxane compound SQ reacts with a hydroxy group or a carboxyl group present on the surface of the carbon black, and thus film-forming properties are deteriorated.

As the carbon black having a pH of 6.0 or more and 10.0 or less, for example, Ketjen black or acetylene black is preferable.

The pH of the carbon black is a value measured by a pH measuring method specified in JIS Z8802 (2011).

In a case where the conductive material is carbon black, a content of the carbon black with respect to the polysiloxane compound SQ is, for example, preferably 0.5% by mass or more and 30% by mass or less, and more preferably 2% by mass or more and 15% by mass or less.

In a case where the conductive material is an ion conductive material, a content of the ion conductive material with respect to the polysiloxane compound SQ is, for example, preferably 5.0% by mass or more and 25.0% by mass or less, and more preferably 10.0% by mass or more and 20.0% by mass or less.

In a case where the conductive material is graphite, a content of the graphite with respect to the polysiloxane compound SQ is, for example, preferably 0.5% by mass or more and 30% by mass or less, and more preferably 2% by mass or more and 15% by mass or less.

In a case where the content of each conductive material is within the above-described range, the electrostatic adhesiveness and the physical adhesiveness are easily reduced.

### (Polysiloxane Compound SQ)

The polysiloxane compound SQ is a polysiloxane compound having a T unit represented by a formula: [R¹SiO_{3/2}]ₘ (in the formula, R¹ represents an organic group, m represents an integer of 2 or more, and at least one R¹ among a plurality of R¹'s present in the T unit is a group including at least one of an alkyl group or an aryl group).

The polysiloxane compound SQ may be a polysiloxane compound having a D unit represented by a formula: (R²R³SiO_{2/2})ₙ (in the formula, R² and R³ are organic groups, and n is an integer of 2 or more), together with the T unit represented by the formula: [R¹SiO_{3/2}]ₘ.

For example, it is preferable that at least one of R² or R³ among a plurality of R²'s and R³'s present in the D unit is a group including at least one of an alkyl group or an aryl group.

In the T unit and the D unit, the organic group of R¹, R², and R³ in the formulae represents, for example, a hydroxyl group, a siloxy group, a hydrocarbon group, a hydrocarbon group in which one or a plurality of methylene groups are replaced with a carbonyl group, a hydrocarbon group in which one or a plurality of carbon atoms are replaced with a heteroatom (an oxygen atom, a nitrogen atom, or a sulfur atom), or a group obtained by combining these groups.

Examples of the siloxy group described as the organic group represented by R¹, R², and R³ include a monoalkylsiloxy group, a dialkylsiloxy group, and a trialkylsiloxy group; and for example, a dialkylsiloxy group or a trialkylsiloxy group is preferable, and a trialkylsiloxy group is more preferable.

Examples of the hydrocarbon group described as the organic group represented by R¹, R², and R³ include an aliphatic hydrocarbon group and an aromatic hydrocarbon group.

Examples of the aliphatic hydrocarbon group include a linear, branched, or alicyclic saturated aliphatic hydrocarbon group, and a linear, branched, or alicyclic unsaturated aliphatic hydrocarbon group.

The aliphatic hydrocarbon group is, for example, preferably a hydrocarbon group having 1 or more and 20 or less carbon atoms, and more preferably a hydrocarbon group having 1 or more and 15 or less carbon atoms.

The aliphatic hydrocarbon group may be substituted with a substituent such as a halogen atom, a hydroxyl group, an amino group, and an aryl group.

Examples of the aromatic hydrocarbon group include a hydrocarbon group having 6 or more and 18 or less carbon atoms (for example, preferably 6 or more and 14 or less carbon atoms). Examples of the aromatic hydrocarbon group include a phenyl group, a naphthyl group, and an anthracenyl group.

The aromatic hydrocarbon group may be substituted with a substituent such as a halogen atom, a hydroxyl group, an amino group, an alkyl group, and an alkoxy group.

The organic group represented by R¹, R², and R³ may have a reactive group. Examples of the reactive group include a vinyl group, an allyl group, a styryl group, a maleimide group, an epoxy group, and a (meth)acryloyl group. That is, the siloxane compound may be a cured product in which the above-described reactive group is reacted.

A plurality of R¹'s, R²'s, and R³'s present in the T unit and the D unit may be the same organic group or different organic groups.

However, at least one R¹ among the plurality of R¹'s present in the T unit is a group including at least one of an alkyl group or an aryl group.

In addition, at least one R² or R³ among the plurality of R²'s and R³'s present in the D unit is, for example, preferably a group including at least one of an alkyl group or an aryl group.

That is, at least one R¹ among the plurality of R¹'s present in the T unit is a group including at least one of an alkyl group or an aryl group.

For example, it is preferable that at least one R² among the plurality of R²'s present in the D unit is a group including at least one of an alkyl group or an aryl group.

For example, it is preferable that at least one R³ among the plurality of R³'s present in the D unit is a group including at least one of an alkyl group or an aryl group.

Here, from the viewpoint of reducing the physical adhesiveness, as the group including an alkyl group, for example, an alkyl group itself or a siloxy group including an alkyl group is preferable. That is, at least one of the plurality of R¹, R², or R³ present in the T unit and the D unit is, for example, preferably an alkyl group or a siloxy group including an alkyl group.

From the viewpoint of reducing the physical adhesiveness, the alkyl group is, for example, preferably an alkyl group having 1 or more and 6 or less carbon atoms, and more preferably an alkyl group having 1 or more and 4 or less carbon atoms or an alkyl group having 1 carbon atom (that is, a methyl group).

As the group including an aryl group, for example, an aryl group itself or an aralkyl group is preferable.

Examples of the aryl group include a phenyl group and a naphthyl group.

Examples of an alkyl group in the aralkyl group include a linear or branched alkyl group having 1 or more and 4 or less carbon atoms. Examples of an aryl group in the aralkyl group include a phenyl group and a naphthyl group. Examples of the aralkyl group include a benzyl group, a 1-phenylethyl group, a 2-phenylethyl group, and a 2-methyl-2-phenylethyl group.

From the viewpoint of reducing the physical adhesiveness, as the group including an aryl group, for example, a phenyl group is preferable.

From the viewpoint of reducing the physical adhesiveness, for example, it is preferable that a presence proportion of the group including at least one of an alkyl group or an aryl group is high with respect to the polysiloxane compound SQ.

In the T unit and the D unit, m and n in the formulae represent an integer of 2 or more; and from the viewpoint of reducing the physical adhesiveness, for example, an integer of 8 or more is preferable, and an integer of 8 or more and 10,000 or less is more preferable.

In the T unit and the D unit, the upper limit of a ratio m/n of m and n in the formulae is, for example, preferably 100/0 or less, and more preferably 100/1 or less. In addition, the lower limit of m/n is, for example, preferably 10/90 or more, more preferably 20/80 or more, and still more preferably 25/75 or more.

The ratio m/n, that is, the ratio of the T unit and the D unit is measured as follows. The ratio m/n is calculated based on the peak ratio of the D unit (high ppm side) and the T unit (low ppm side) by solid ²⁹Si NMR.

From the viewpoint of low surface free energy, a content of the polysiloxane compound SQ with respect to the film is, for example, preferably 10% by mass or more, more preferably 20% by mass or more, and still more preferably 30% by mass or more.

The polysiloxane compound SQ may be in a particle shape. A volume average particle diameter of the particle-shaped polysiloxane compound SQ is, for example, preferably 0.01 µm or more and 10 µm or less, more preferably 0.01 µm or more and 5 µm or less, and still more preferably 0.01 µm or more and 2.5 µm or less. The volume average particle diameter of the particle-shaped polysiloxane compound SQ is, for example, particularly preferably 2.5 µm or less and more preferably 1 µm or less.

In a case where the volume average particle diameter of the particle-shaped polysiloxane compound SQ is within the above-described range, the physical adhesiveness is easily reduced.

The volume average particle diameter of the particle-shaped polysiloxane compound SQ is measured as follows.

A sample is collected from the film. The sample is a sample in which a cut surface along a thickness direction of the film is used as an observation surface.

The observation surface of the sample is observed with a scanning electron microscope to capture an image. In the image, an area of each primary particle of the polysiloxane compound SQ is measured by image analysis, and an equivalent circle diameter thereof is calculated from this area value. The calculation of the equivalent circle diameter is carried out for 100 particles of the polysiloxane compound SQ. A 50% diameter (D50v) in the volume-based cumulative frequency of the obtained equivalent circle diameter is defined as the volume average particle diameter of the polysiloxane compound SQ.

Examples of the polysiloxane compound SQ include a polymer compound referred to as silsesquioxane (SQ) having various skeleton structures.

The polysiloxane compound SQ may have, as a skeleton structure, any of a cage-type structure (a perfect cage-type structure or a cage-type structure), a ladder-type structure, or a random structure.

### (Binding Material)

The film according to the present exemplary embodiment may contain a binding resin as a binding material for fixing the particle-shaped polysiloxane compound in the film.

Examples of the binding resin include a silicone resin, a polyimide resin (PI resin), a polyamide-imide resin (PAI resin), a polyether ketone resin (for example, an aromatic polyether ether ketone resin or the like), a polyphenylene sulfide resin (PPS resin), a polyetherimide resin (PEI resin), a polyester resin, a polystyrene resin, a polyamide resin, a polycarbonate resin, a polyethylene terephthalate resin (PET resin), and a mixed resin thereof.

Examples of the binding resin also include chloroprene rubber, epichlorohydrin rubber, isoprene rubber, butyl rubber, polyurethane rubber, silicone rubber, fluororubber, styrenebutadiene rubber, butadiene rubber, nitrile rubber (NBR), ethylene propylene rubber, ethylenepropylene-diene ternary copolymer rubber (EPDM), natural rubber, and mixed rubber thereof.

As the binding resin, from the viewpoint of reducing the physical adhesiveness, for example, a silicone resin or a silicone rubber is suitable.

For example, a content of the binding resin is preferably set to be an amount that is the principal component of the film. Here, the amount that is the principal component of the film means an amount of the component that is the highest among components contained in the film.

However, the content of the binding resin with respect to the film is, for example, preferably 80% by mass or less, more preferably 70% by mass or less, and still more preferably 60% by mass or less.

### (Other Additives)

The film according to the present exemplary embodiment may contain other additives. As the other additives, well-known additives such as a reinforcing agent, an antioxidant, a surfactant, and a heat aging inhibitor can be appropriately selected.

A content of the additive with respect to the film is, for example, preferably 30% by mass or less, more preferably 20% by mass or less, and still more preferably 10% by mass or less.

### (Method of Forming Film)

Examples of a method of forming the film include a method of forming the film by a coating method such as a blade coating method, a dip coating method, a spray coating method, a ring coating method, and a brush coating method.

The film is formed by applying a coating liquid containing the above-described components and a solvent as necessary onto a substrate by the above-described coating method, and drying or drying and curing the coating liquid.

Here, the substrate corresponds to, for example, a monolayer of a layer to be formed into the film, or a laminate including the layer.

Here, in the blade coating method, a spiral streak (also referred to as "spiral mark") is generated by spreading the coating liquid with a metal plate (that is, a blade). In the dip coating method or the ring coating method, a film thickness difference in an axial direction occurs due to liquid dripping. In the spray coating method, a surface roughness in a pear skin shape occurs due to coating unevenness. In this way, the film is likely to have coating defects.

However, in a case where the coating liquid containing the above-described components and a solvent as necessary is used and these coating methods are applied, a film having reduced coating defects can be formed.

In a case where the blade coating method is applied, the film is formed as follows, for example.
(1) The substrate is fixed to an outer peripheral surface of a cylindrical mold having a width longer than the substrate.
(2) A coating device that discharges the coating liquid is moved relative to the cylindrical mold along an axial direction of the mold at a target coating speed in a state in which the axial direction of the mold is along the horizontal direction while rotating the cylindrical mold in a circumferential direction, and the coating liquid is continuously applied onto the substrate.
(3) A metal plate (that is, a blade) having a width shorter than the substrate is moved along the axial direction at the same speed as the coating speed of the coating device in a state of being brought into contact with the coating liquid applied onto the substrate to spread the coating liquid.
(4) The spread coating film of the coating liquid is dried or dried and cured to form the film.

In a case where the dip coating method is applied, the film is formed as follows, for example.
(1) The substrate is fixed to an outer peripheral surface of a cylindrical mold having a width longer than the substrate.
(2) The coating liquid is filled in a cylindrical container having a bottom, and the substrate fixed to the cylindrical mold is dipped in the coating liquid.
(3) The dipped substrate is pulled up to apply the coating liquid onto the substrate.
(4) The coating film of the coating liquid is dried or dried and cured to form the film.

In a case where the spray coating method is applied, the film is formed as follows, for example.
(1) The substrate is fixed to an outer peripheral surface of a cylindrical mold having a width longer than the substrate.
(2) A coating device that sprays the coating liquid is moved relative to the cylindrical mold along an axial direction of the mold at a target coating speed in a state in which the axial direction of the mold is along the horizontal direction while rotating the cylindrical mold in a circumferential direction, and the coating liquid is applied onto the substrate.
(3) The coating liquid is applied in a plurality of layers by repeating reciprocating movement of the coating device in the axial direction of the mold while spraying the coating liquid from the coating device to obtain a coating film.
(4) The coating film of the coating liquid is dried or dried and cured to form the film.

In a case where the ring coating method is applied, the film is formed as follows, for example.
(1) The substrate is fixed to an outer peripheral surface of a cylindrical mold having a width longer than the substrate.
(2) The substrate fixed to the cylindrical mold is inserted into a substrate insertion portion of a ring-shaped coating device until the substrate is exposed from the substrate insertion portion in a state in which an axial direction of the mold is along the vertical direction and the substrate is coaxial with the substrate insertion portion; the coating liquid is discharged from a side surface of the substrate insertion portion of the ring-shaped coating device while moving the ring-shaped coating device and the substrate relative to each other in the substrate axial direction to apply the coating liquid onto the substrate;
   here, as the ring-shaped coating device, for example, a coating device in which a resin sheet having a hole is fixed to a bottom surface of a cylindrical metal container having a hole in the bottom surface, the resin sheet being coaxial with the hole of the cylindrical metal container, with a gap is applied; the bottom surface of the cylindrical metal container and the hole of the resin sheet are the substrate insertion portion; the coating liquid is poured between the bottom surface of the ring-shaped coating device and the resin sheet to discharge the coating liquid from the side surface of the substrate insertion portion.
(3) The coating film of the coating liquid is dried or dried and cured to form the film.

In a case where the brush coating method is applied, the film is formed as follows, for example.
(1) The substrate is fixed to an outer peripheral surface of a cylindrical mold having a width longer than the substrate.
(2) A brush having a width larger than the substrate and impregnated with the coating liquid is brought into contact with the substrate while moving the brush relative to the mold along an axial direction of the mold at a target coating speed in a state in which the axial direction of the mold is along a horizontal direction while rotating the cylindrical mold in a circumferential direction, and the coating liquid is applied onto the substrate.
(3) The coating liquid is applied in a plurality of layers by repeating reciprocating movement of the brush in the axial direction of the mold to obtain a coating film.
(4) The coating film of the coating liquid is dried or dried and cured to form the film.

### <Member>

The member according to the present exemplary embodiment is a member including the film as a layer constituting an outer surface.

Specifically, the member according to the present exemplary embodiment includes, for example, a resin base material and a surface layer that is provided on the resin base material and consists of the film according to the present exemplary embodiment described above.

Examples of the resin base material include a resin base material of a silicone resin, a polyimide resin (PI resin), a polyamide-imide resin (PAI resin), a polyether ketone resin (for example, an aromatic polyether ether ketone resin or the like), a polyphenylene sulfide resin (PPS resin), a polyetherimide resin (PEI resin), a polyester resin, a polystyrene resin, a polyamide resin, a polycarbonate resin, a polyethylene terephthalate resin (PET resin), and a mixed resin thereof.

The resin base material may contain well-known additives such as a reinforcing agent, an antioxidant, a surfactant, and a heat aging inhibitor.

The member according to the present exemplary embodiment can be applied to, for example, a member for an image forming apparatus using an electrophotographic method. The member for an image forming apparatus using an electrophotographic method can be adopted as a fixing member (a heating member, a pressurizing member, a sliding member, or the like), an intermediate transfer body, a transfer member (a primary transfer member, a secondary transfer member, or the like), a recording medium transport member, and the like.

The member according to the present exemplary embodiment may include an elastic layer between the resin base material and the surface layer depending on the application. In addition, a well-known metal heat generation layer for electromagnetic induction heating may be provided between the base material and the elastic layer.

The member according to the present exemplary embodiment is, for example, preferably applied to a pressurizing member as a fixing member. As a result, electrostatic offset and contamination of a back surface of a recording medium can be suppressed.

### <Fixing Device>

The fixing device according to the present exemplary embodiment includes a heating member and a pressurizing member disposed in contact with an outer surface of the heating member, in which the pressurizing member is configured by an endless belt consisting of the member according to the present exemplary embodiment described above.

Hereinafter, the fixing device according to the present exemplary embodiment will be described with reference to a fixing device including a heating roll (an example of the heating member) and a pressurizing belt (an example of the pressurizing member).

The fixing device according to the present exemplary embodiment may be a fixing device including a heating belt and a pressurizing belt.

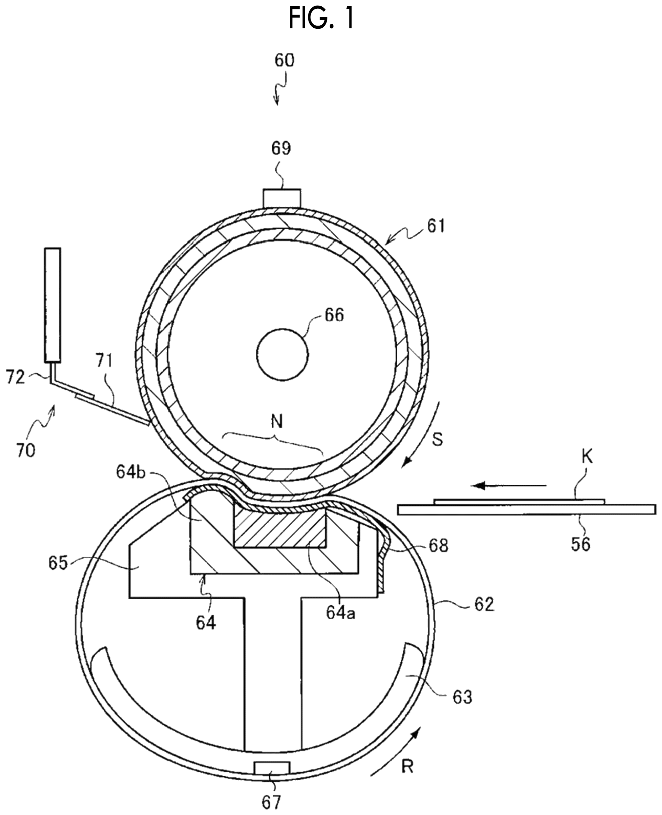

An example of the fixing device according to the present exemplary embodiment will be described with reference to FIG. 1. FIG. 1 is a schematic view showing an example (that is, a fixing device 60) of the fixing device according to the present exemplary embodiment.

As shown in FIG. 1, the fixing device 60 includes, for example, a heating roll 61 that is rotationally driven, a pressurizing belt 62, and a pressing pad 64 that presses the heating roll 61 through the pressurizing belt 62.

The heating roll 61 is an example of a first rotating body. The pressurizing belt 62 is an example of a second rotating body.

The pressing pad 64 is a pad that presses the heating roll 61 through the pressurizing belt 62, and is an example of a pressing member.

Regarding the pressing pad 64, for example, the pressurizing belt 62 and the heating roll 61 may be relatively pressed. Therefore, the pressurizing belt 62 may be pressed against the heating roll 61, or the heating roll 61 may be pressed against the pressurizing belt 62.

A halogen lamp 66 (an example of a heating device) is disposed inside the heating roll 61. The heating device is not limited to the halogen lamp, and other heating members that generate heat may be used.

Meanwhile, for example, a temperature-sensitive element 69 is disposed in contact with a surface of the heating roll 61. The lighting of the halogen lamp 66 is controlled based on a temperature measurement value by the temperature-sensitive element 69, and a surface temperature of the heating roll 61 is kept at a target set temperature (for example, 150°C).

For example, the pressurizing belt 62 is rotatably supported by the pressing pad 64 and a belt traveling guide 63 that are disposed inside the pressurizing belt 62. In a sandwiching region N (nip portion), the pressurizing belt 62 is disposed to be pressed against the heating roll 61 by the pressing pad 64.

The pressing pad 64 is disposed, for example, on an inner side of the pressurizing belt 62 in a state of being pressed against the heating roll 61 through the pressurizing belt 62. The pressing pad 64 forms the sandwiching region N with the heating roll 61.

In the pressing pad 64, for example, a front sandwiching member 64a for securing a wide sandwiching region N is disposed on the inlet side of the sandwiching region N, and a peeling sandwiching member 64b for imparting distortion to the heating roll 61 is disposed on the outlet side of the sandwiching region N.

In order to reduce sliding resistance between an inner peripheral surface of the pressurizing belt 62 and the pressing pad 64, for example, a sheet-like sliding member 68 is provided on surfaces of the front sandwiching member 64a and the peeling sandwiching member 64b in contact with the pressurizing belt 62. The pressing pad 64 and the sliding member 68 are held by a metal holding member 65.

The sliding member 68 is provided, for example, such that a sliding surface thereof is in contact with the inner peripheral surface of the pressurizing belt 62, and is involved in holding and supplying an oil present between the sliding member 68 and the pressurizing belt 62.

For example, the belt traveling guide 63 is attached to the holding member 65. The pressurizing belt 62 is configured to be guided by the belt traveling guide 63 to rotate.

A lubricant supply device 67 that supplies a lubricant (oil) to the inner peripheral surface of the pressurizing belt 62 is attached to the belt traveling guide 63.

The heating roll 61 rotates in a direction of an arrow S by, for example, a drive motor (not shown). The pressurizing belt 62 rotates in a direction of an arrow R, opposite to the rotation direction of the heating roll 61, in response to the rotation of the heating roll 61. That is, for example, the heating roll 61 rotates clockwise in FIG. 1, while the pressurizing belt 62 rotates counterclockwise.

Paper K (an example of a recording medium) having an unfixed toner image is guided by, for example, a fixing inlet guide 56, and transported to the sandwiching region N. While the paper K is passing through the sandwiching region N, the unfixed toner image on the paper K is fixed by the pressure and heat acting on the sandwiching region N.

In the fixing device 60, for example, by the front sandwiching member 64a in the form of a recess conforming to the outer peripheral surface of the heating roll 61, the wide sandwiching region N is secured, compared to a configuration having no front sandwiching member 64a.

In addition, in the fixing device 60, for example, the peeling sandwiching member 64b is disposed to protrude from the outer peripheral surface of the heating roll 61 such that the distortion of the heating roll 61 is locally increased in an outlet region of the sandwiching region N.

In a case where the peeling sandwiching member 64b is disposed as described above, for example, the paper K after the fixing passes through the distortion formed locally large in a case of passing through the peeling sandwiching region, and thus the paper K is easily peeled off from the heating roll 61.

As an auxiliary device for the peeling, for example, a peeling member 70 is disposed on the downstream side of the sandwiching region N of the heating roll 61. The peeling member 70 is, for example, held by a holding member 72 in a state in which a peeling claw 71 is close to the heating roll 61 in a direction facing the rotation direction of the heating roll 61 (counter direction).

### <Image Forming Apparatus>

Next, the image forming apparatus according to the present exemplary embodiment will be described.

The image forming apparatus according to the present exemplary embodiment includes:
an image holder;
a charging device that charges a surface of the image holder;
an electrostatic latent image forming device that forms an electrostatic latent image on the charged surface of the image holder;
a developing device that accommodates a developer containing a toner and develops the electrostatic latent image formed on the surface of the image holder with the developer to form a toner image;
a transfer device that transfers the toner image onto a surface of a recording medium; and
the fixing device that fixes the toner image on the surface of the recording medium.

As the fixing device, the fixing device according to the present exemplary embodiment is applied.

In the image forming apparatus according to the present exemplary embodiment, the fixing device may be made into each cartridge such that the fixing device is detachable from an image forming apparatus. That is, the image forming apparatus according to the present exemplary embodiment may include each fixing device according to the present exemplary embodiment, as a device configuring a process cartridge.

Hereinafter, the image forming apparatus according to the present exemplary embodiment will be described with reference to a drawing.

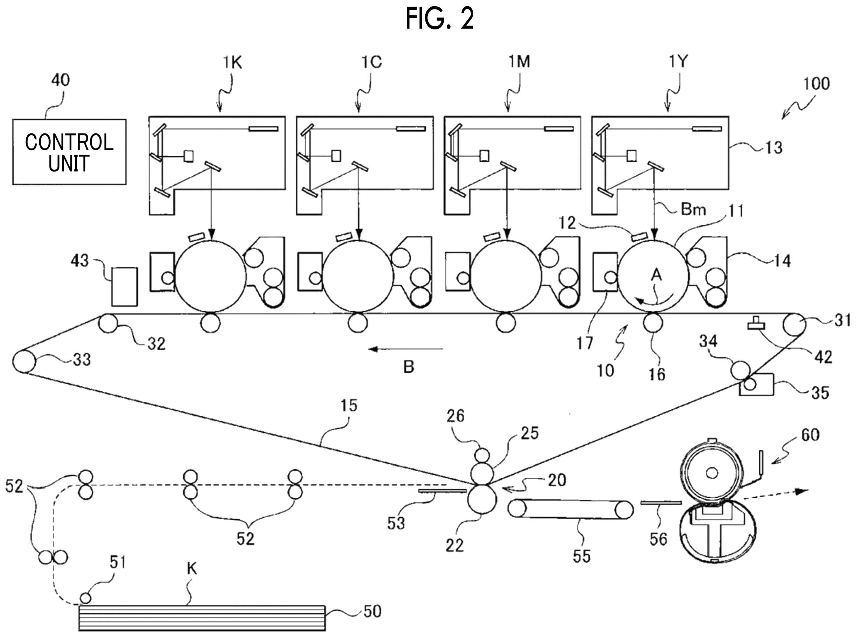

FIG. 2 is a schematic configuration view showing a configuration of the image forming apparatus according to the present exemplary embodiment.

As shown in FIG. 2, an image forming apparatus 100 according to the present exemplary embodiment is, for example, an intermediate transfer-type image forming apparatus generally called a tandem type.

The image forming apparatus 100 includes a plurality of image forming units 1Y, 1M, 1C, and 1K, an intermediate transfer belt 15, a primary transfer unit 10, a secondary transfer unit 20, and the fixing device 60. In addition, the image forming apparatus 100 includes a control unit 40 that controls the operation of each device (or each unit).

Here, the image forming units 1Y, 1M, 1C, and 1K are image forming units that form a toner image of each color component by an electrophotographic method.

The primary transfer unit 10 is a transfer unit that sequentially transfers (primary transfers) the toner image of each color component formed by the image forming units 1Y, 1M, 1C, and 1K to the intermediate transfer belt 15.

The secondary transfer unit 20 is a transfer unit that collectively transfers (secondary transfers) the superimposed toner images transferred to the intermediate transfer belt 15 to the paper K that is the recording medium.

The fixing device 60 is a device that fixes the image transferred by the secondary transfer to the paper K.

Each of the image forming units 1Y, 1M, 1C, and 1K of the image forming apparatus 100 includes a photoreceptor 11 that rotates in a direction of an arrow A, as an example of an image holder that holds a toner image formed on the surface.

Around the photoreceptor 11, a charger 12 that charges the photoreceptor 11 is provided as an example of the charging device. Around the photoreceptor 11, a laser exposure device 13 (exposure beam is indicated by a reference numeral Bm in the drawing) that writes an electrostatic latent image on the photoreceptor 11 is provided as an example of the electrostatic latent image forming device.

Around the photoreceptor 11, a developer 14 that accommodates the toner of each color component and visualizes the electrostatic latent image on the photoreceptor 11 with the toner is provided as an example of the developing device.

Around the photoreceptor 11, a primary transfer roll 16 that transfers the toner image of each color component formed on the photoreceptor 11 to the intermediate transfer belt 15 by the primary transfer unit 10 is provided.

Around the photoreceptor 11, a photoreceptor cleaner 17 that removes a residual toner on the photoreceptor 11 is provided.

The charger 12, the laser exposure device 13, the developer 14, the primary transfer roll 16, and the photoreceptor cleaner 17 are sequentially arranged around the photoreceptor 11 along the rotation direction of the photoreceptor 11.

These image forming units 1Y, 1M, 1C, and 1K are substantially linearly arranged in order of yellow (Y), magenta (M), cyan (C), and black (K) from the upstream side of the intermediate transfer belt 15.

By various rolls, the intermediate transfer belt 15 is driven to circulate (rotate) in the direction of an arrow B shown in FIG. 2 at a speed fit for the purpose.

The various rolls include a drive roll 31, a support roll 32, a tension applying roll 33, a back roll 25, and a cleaning back roll 34.

The drive roll 31 is a roll that is driven by a motor (not shown) having an excellent constant speed property and rotates the intermediate transfer belt 15.

The support roll 32 is a roll that supports the intermediate transfer belt 15 extending in a substantially linear shape along the arrangement direction of each photoreceptor 11.

The tension applying roll 33 is a roll that is provided in the secondary transfer unit 20, has a function of applying a tension to the intermediate transfer belt 15, and prevents the intermediate transfer belt 15 from meandering.

The cleaning back roll 34 is a roll that is provided in a cleaning portion that scrapes off the residual toner on the intermediate transfer belt 15.

The primary transfer unit 10 is configured with the primary transfer roll 16 that is disposed to face the photoreceptor 11 across the intermediate transfer belt 15.

The primary transfer roll 16 is disposed to be pressed against the photoreceptor 11 with the intermediate transfer belt 15 therebetween, and a voltage with a polarity (primary transfer bias) opposite to the charging polarity (negative polarity; the same applies hereafter) of the toner is applied to the primary transfer roll 16. As a result, the toner image on each photoreceptor 11 is sequentially electrostatically sucked onto the intermediate transfer belt 15, which leads to the formation of overlapped toner images on the intermediate transfer belt 15.

The secondary transfer unit 20 is configured to include the back roll 25 and a secondary transfer roll 22 that is disposed on a toner image-holding surface side of the intermediate transfer belt 15.

The secondary transfer roll 22 is disposed to be pressed on the back roll 25 across the intermediate transfer belt 15, and the secondary transfer roll 22 is grounded such that the secondary transfer bias is formed between the secondary transfer roll 22 and the back roll 25, that induces secondary transfer of the toner image onto the paper K transported to the secondary transfer unit 20.

In addition, an intermediate transfer belt cleaner 35 is provided on the downstream side of the secondary transfer unit 20 on the intermediate transfer belt 15 to be freely attachable to and detachable from the intermediate transfer belt 15.
The intermediate transfer belt cleaner 35 is a cleaner that removes the residual toner or paper powder on the intermediate transfer belt 15 after the secondary transfer, and cleans the surface of the intermediate transfer belt 15.

The intermediate transfer belt 15, the primary transfer unit 10 (primary transfer roll 16), and the secondary transfer unit 20 (secondary transfer roll 22) correspond to an example of the transfer device.

On the other hand, a reference sensor (home position sensor) 42 is disposed on an upstream side of the yellow image forming unit 1Y.

The reference sensor 42 is a sensor that generates a reference signal serving as a reference for taking an image forming timing in each of the image forming units 1Y, 1M, 1C, and 1K.

The reference sensor 42 recognizes a mark provided on a back side of the intermediate transfer belt 15 to generate the reference signal. Each of the image forming units 1Y, 1M, 1C, and 1K is configured to start the image formation in response to an instruction from the control unit 40 based on the recognition of the reference signal.

An image density sensor 43 used to adjust image quality is provided on the downstream side of the black image forming unit 1K.

The image forming apparatus 100 includes a paper storage portion 50, a paper feeding roll 51, a transport roll 52, a transport guide 53, a transport belt 55, and a fixing inlet guide 56.

The paper storage portion 50 is a storage portion that accommodates the paper K, as a transport device that transports the paper K.

The paper feeding roll 51 is a roll that takes out the paper K accumulated in the paper storage portion 50 at a predetermined timing, and transports the paper K.

The transport roll 52 is a roll that transports the paper K fed by the paper feeding roll 51.

The transport guide 53 is a guide that feeds the paper K transported by the transport roll 52 to the secondary transfer unit 20.

The transport belt 55 is a belt that transports the paper K, that is secondarily transferred by the secondary transfer roll 22, to the fixing device 60.

The fixing inlet guide 56 is a guide that guides the paper K to the fixing device 60.

Next, basic image forming process of the image forming apparatus 100 according to the present exemplary embodiment will be described.

In the image forming apparatus 100 according to the present exemplary embodiment, image data output from an image reading device (not shown), a personal computer (PC) (not shown), or the like is subjected to image processing by an image processing device (not shown), and then the image forming units 1Y, 1M, 1C, and 1K perform the image forming operation.

In the image processing device, various types of image processing, such as shading correction, misregistration correction, brightness/color space conversion, gamma correction, frame removal or color editing, and movement editing, are performed on input image data. The image data that has been subjected to the image processing is converted into color material gradation data of four colors of yellow (Y), magenta (M), cyan (C), and black (K), and is output to the laser exposure device 13.

In the laser exposure device 13, according to the input color material gradation data, for example, the photoreceptor 11 of each of the image forming units 1Y, 1M, 1C, and 1K is irradiated with an exposure beam Bm emitted from a semiconductor laser. The surface of each of the photoreceptors 11 of the image forming units 1Y, 1M, 1C, and 1K is charged by the charger 12, and is then scanned and exposed by the laser exposure device 13, so that the electrostatic latent image is formed. By each of the image forming units 1Y, 1M, 1C, and 1K, the formed electrostatic latent image is developed as a toner image of each of the colors of yellow (Y), magenta (M), cyan (C), and black (K).

The toner image formed on each of the photoreceptors 11 of the image forming units 1Y, 1M, 1C, and 1K is transferred onto the intermediate transfer belt 15 at the primary transfer unit 10 where each photoreceptor 11 and the intermediate transfer belt 15 are in contact with each other. More specifically, in the primary transfer unit 10, by the primary transfer roll 16, a voltage (primary transfer bias) with a polarity opposite to the charging polarity (negative polarity) of the toner is applied to the substrate of the intermediate transfer belt 15, and the toner images are sequentially overlapped on the surface of the intermediate transfer belt 15 and subjected to primary transfer.

After the primary transfer by which the toner images are sequentially transferred to the surface of the intermediate transfer belt 15, the intermediate transfer belt 15 moves, and the toner images are transported to the secondary transfer unit 20. In a case where the toner images are transported to the secondary transfer unit 20, in the transport device, the paper feeding roll 51 rotates in accordance with the timing at which the toner images are transported to the secondary transfer unit 20, and the paper K having the target size is fed from the paper storage portion 50. The paper K fed from the paper feeding roll 51 is transported by the transport roll 52, passes through the transport guide 53, and reaches the secondary transfer unit 20. The paper K is temporarily stopped before reaching the secondary transfer unit 20. The position alignment roll (not shown) rotates in accordance with the movement timing of the intermediate transfer belt 15 on which the toner image is held, and the position of the paper K and the position of the toner image are aligned.

In the secondary transfer unit 20, via the intermediate transfer belt 15, the secondary transfer roll 22 is pressed on the back roll 25. At this time, the paper K transported at the right timing is interposed between the intermediate transfer belt 15 and the secondary transfer roll 22. At this time, in a case where a voltage (secondary transfer bias) with the same polarity as the charging polarity (negative polarity) of the toner is applied from the power supply roll 26, a transfer electric field is formed between the secondary transfer roll 22 and the back roll 25. In the secondary transfer unit 20 pressed by the secondary transfer roll 22 and the back roll 25, the unfixed toner images held on the intermediate transfer belt 15 are electrostatically transferred onto the paper K in a batch.

Thereafter, the paper K on which the toner image is electrostatically transferred is transported as it is in a state of being peeled off from the intermediate transfer belt 15 by the secondary transfer roll 22. The paper K is transported to the transport belt 55 provided on a downstream side of the secondary transfer roll 22 in the paper transport direction. The transport belt 55 transports the paper K to the fixing device 60 according to the optimum transport speed in the fixing device 60. The unfixed toner images on the paper K transported to the fixing device 60 are fixed on the paper K by being subjected to a fixing treatment by heat and pressure by the fixing device 60. The paper K on which the fixed image is formed is transported to an ejected paper-storing portion (not shown) provided in an output portion of the image forming apparatus 100.

On the other hand, after the transfer to the paper K is completed, the residual toner remaining on the intermediate transfer belt 15 is transported to the cleaning unit with the rotation of the intermediate transfer belt 15. The residual toner is removed from the intermediate transfer belt 15 by the cleaning back roll 34 and the intermediate transfer belt cleaner 35.

Although the present exemplary embodiment has been described, the present exemplary embodiment is not limited to the above-described exemplary embodiments, and various modifications, changes, and ameliorations can be added thereto.

### [Examples]

Hereinafter, the present exemplary embodiment will be described in more detail with reference to Examples, but the present exemplary embodiment is not limited to Examples. In the following description, "part" represents "part by mass" unless otherwise specified.

### <Example 1>

A polyimide resin (hereinafter, "PI") base material formed in an endless belt shape and having a diameter of 168 mm, a width of 400 mm, and a film thickness of 80 µm is prepared.

Next, a coating liquid having the following formulation is applied onto the base material, and the coating liquid is irradiated with ultraviolet rays to form a surface layer having a thickness of 30 µm.

The formulation of the coating liquid is as follows.
· Polysiloxane compound: "OX-SQ-SI20", TOAGOSEI CO., LTD., polysiloxane compound having a T unit represented by the formula: [R¹SiO_{3/2}]ₘ (in the formula, R¹ = a methyl group and an oxetanyl group) and a D unit represented by the formula: (R²R³SiO_{2/2})ₙ (in the formula, R² and R³ = methyl groups): 98 parts
· Conductive material: Ketjen black ("EC600JD", Lion Specialty Chemicals Co., Ltd.): 2 parts
· Solvent: heptane: 10 parts

As a result of the above-described operation, an endless belt is obtained.

### <Examples 2 to 13, and 15, and Comparative Examples 0, 1, and 2>

An endless belt is obtained in the same manner as in Example 1, except that the following items are changed according to Table 1. However, in an example in which SQ2 or SQ3 is used instead of SQ1 as the polysiloxane compound, the treatment on the coating film after the coating is changed from the ultraviolet irradiation to a heating treatment at 120°C for 30 minutes.
· Type and amount of polysiloxane compound
· Type and amount of conductive material

### <Example 14>

A polyimide resin (hereinafter, "PI") base material formed in an endless belt shape and having a diameter of 168 mm, a width of 400 mm, and a film thickness of 80 µm is prepared.

A mixture of 20 parts by mass of a siloxane compound of the type shown in Table 1 and 2 parts by mass of a conductive material is mixed with 78 parts by mass of a polyether ether ketone (PEEK) resin, and the mixture is molded by extrusion molding to obtain a tube having a thickness of 20 µm.

The obtained tube is coated on the base material, and fired at 200°C for 1 hour to form a surface layer.

### <Evaluation of Characteristics>

The following characteristics of the endless belt of each of Examples are measured by the above-described method.
· Surface resistivity of surface layer
· Water contact angle of surface layer

### <Evaluation of Contamination of Back Surface of Paper>

Each of the endless belts of Examples is mounted on an evaluation image forming apparatus ("ApeosPort C2410SD" manufactured by FUJIFILM Business Innovation Corp.) as a pressurizing belt of a fixing device.

100 black halftone images having a density of 50% are output onto A4 paper from the evaluation image forming apparatus. Contamination of a back surface of the paper is evaluated according to the following standard.
A+: number of sheets of paper on which the contamination of the back surface is confirmed is 1 or less.
A: number of sheets of paper on which the contamination of the back surface is confirmed is 3 or less.
B: number of sheets of paper on which the contamination of the back surface is confirmed is 4 or more and 11 or less.
C: number of sheets of paper on which the contamination of the back surface is confirmed is 12 or more and 24 or less.
D: number of sheets of paper on which the contamination of the back surface is confirmed is 25 or more.

### <Evaluation of Electrostatic Offset>

Each of the endless belts of Examples is mounted on an evaluation image forming apparatus ("ApeosPort C2410SD" manufactured by FUJIFILM Business Innovation Corp.) as a pressurizing belt of a fixing device.

100 black halftone images having a density of 50% are output onto A4 paper from the evaluation image forming apparatus. Image deviation due to electrostatic offset is evaluated according to the following standard.
A+: number of sheets of paper on which the image deviation is confirmed is 1 or less.
A: number of sheets of paper on which the image deviation is confirmed is 3 or less.
B: number of sheets of paper on which the image deviation is confirmed is 4 or more and 11 or less.
C: number of sheets of paper on which the image deviation is confirmed is 12 or more and 24 or less.
D: number of sheets of paper on which the image deviation is confirmed is 25 or more.

### <Polysiloxane Compound>

Details of the polysiloxane compound and the conductive material used in each of Examples are as follows.
· SQ1: "OX-SQ-SI20", TOAGOSEI CO., LTD., polysiloxane compound having a T unit represented by the formula: [R¹SiO_{3/2}]ₘ (in the formula, R¹ = a methyl group and an oxetanyl group) and a D unit represented by the formula: (R²R³SiO_{2/2})ₙ (in the formula, R² and R³ = methyl groups)
· SQ2: "SR-13H", KONISHI CHEMICAL IND CO., LTD., polysiloxane compound having only T unit represented by the formula [R¹SiO_{3/2}]ₘ (in the formula, R¹ = a methyl group)
· SQ3: "SR-23", KONISHI CHEMICAL IND CO., LTD., polysiloxane compound having only T unit represented by the formula [R¹SiO_{3/2}]ₘ (in the formula, R¹ = a phenyl group)
· SQ4: "Gransil PSQ", Grant Industries, Inc., particles of a polysiloxane compound having only T unit represented by the formula: [R¹SiO_{3/2}]ₘ (in the formula, R¹ = a methyl group), volume average particle diameter: 4 to 6 µm
· Ketjen black: ("EC600JD", Lion Specialty Chemicals Co., Ltd.)
· Acetylene black: ("Denka Black", Denka Company Limited)
· Carbon black: ("FW200", Orion Engineering Carbon Co., Ltd.)
· PEL: (complex of LiClO₄ and polyethylene glycol, "PEL-20A", Nippon Carlit Co., Ltd.)
· Lithium perchlorate: ("Lithium perchlorate", FUJIFILM Wako Pure Chemical Corporation)
· Graphite: ("UP-5N", Nippon Graphite Industry Co., Ltd.)

**[Table 1]**

| | Binding material | | Additive | | | | | | Characteristics of surface layer | | Evaluation | |
|---|---|---|---|---|---|---|---|---|---|---|---|---|
| | Binding resin | Polysiloxane compound | Polysiloxane compound | | Conductive material | | | | Surface resistivity | Water contact angle | Contamination of back surface of paper | Electrostatic offset |
| | | | Type | Amount (% by mass with respect to surface layer) | Type | pH | Amount (% by mass with respect to surface layer) | Amount (% by mass with respect to polysiloxane compound) | Ω/sq | ∘ | | |
| Examples 1 | - | SQ1 | - | - | Acetylene black | 9.5 | 2.0 | 2.04 | 1.0 × 10⁶ | 108 | A+ | A+ |
| Examples 2 | - | SQ1 | - | - | Acetylene black | 9.5 | 0.5 | 0.50 | 8.9 × 10⁷ | 110 | A+ | B |
| Examples 3 | - | SQ1 | - | - | Acetylene black | 9.5 | 15.0 | 17.65 | 5.0 × 10³ | 91 | B | A |
| Examples 4 | - | SQ1 | - | - | Acetylene black | 9.5 | 23.0 | 29.87 | 1.0 × 10³ | 85 | C | B |
| Examples 5 | - | SQ1 | - | - | Acetylene black | 9.0 | 2.0 | 2.04 | 5.0 × 10⁵ | 108 | A+ | A+ |
| Examples 6 | - | SQ1 | - | - | Acetylene black | 9.0 | 0.5 | 0.50 | 8.9 × 10⁷ | 112 | A+ | B |
| Examples 7 | - | SQ1 | - | - | Acetylene black | 9.0 | 15.0 | 17.65 | 6.0 × 10³ | 93 | B | A |
| Examples 8 | - | SQ1 | - | - | Acetylene black | 9.0 | 23.0 | 29.87 | 1.3 × 10³ | 86 | C | B |
| Examples 9 | - | SQ1 | - | - | PEL | - | 5.0 | 5.26 | 9.0 × 10⁷ | 110 | A+ | B |
| Examples 10 | - | SQ1 | - | - | PEL | - | 20.0 | 25.00 | 4.0 × 10⁷ | 93 | B | B |
| Examples 11 | - | SQ1 | - | - | Lithium perchlorate | - | 20.0 | 25.00 | 6.0 × 10⁷ | 90 | B | B |
| Comparative Example 0 | - | SQ1 | - | - | Carbon nanotube | - | 10.0 | 11.11 | 1.0 × 10² | 87 | D | D |
| Examples 12 | - | SQ2 | - | - | Acetylene black | 9.5 | 2.0 | 2.04 | 8.0 × 10⁵ | 108 | A+ | A+ |
| Examples 13 | - | SQ3 | - | - | Acetylene black | 9.5 | 2.0 | 2.04 | 2.0 × 10⁶ | 105 | A | A+ |
| Examples 14 | PEEK | - | SQ4 | 20 | Acetylene black | 9.5 | 2.0 | 10.00 | 2.6 × 10⁷ | 101 | A | A+ |
| Examples 15 | - | SQ1 | - | - | Graphite | - | 5.0 | 5.26 | 3.0 × 10³ | 98 | A | B |
| Comparative Example 1 | - | SQ1 | - | - | Acetylene black | 9.5 | 0.3 | 0.30 | 1.0 × 10¹⁰ | 115 | A+ | D |
| Comparative Example 2 | - | SQ1 | - | - | Acetylene black | 9.5 | 24.0 | 31.58 | 8.0 × 10¹ | 80 | D | D |
| Comparative Example 3 | - | SQ1 | - | - | Acetylene black | 9.0 | 0.3 | 0.30 | 9.0 × 10⁸ | 116 | A+ | D |
| Comparative Example 4 | - | SQ1 | - | - | Acetylene black | 9.0 | 24.0 | 31.58 | 4.0 × 10¹ | 83 | D | D |
| Comparative Example 5 | - | SQ1 | - | - | PEL | - | 2.0 | 2.04 | 2.0 × 10⁹ | 115 | A+ | D |
| Comparative Example 6 | - | SQ1 | - | - | FW200 | 3.5 | 10.0 | 11.11 | - | - | D | D |
| Comparative Example 7 | - | SQ1 | - | - | Graphite | - | 24.0 | 31.58 | 4.0 × 10² | 85 | D | D |

From the above results, it is found that, in the present example, the contamination of the back surface of the paper and the electrostatic offset are suppressed as compared with Comparative Examples.

As a result, it is found that the film constituting the surface layer of the endless belt of the present example has low electrostatic adhesiveness and low physical adhesiveness.

### <Examples 101 to 105>

A coating film of a coating liquid having the same formulation as in Example 1 is formed by a coating method according to Table 2, and the coating film is dried and cured to form a surface layer. An endless belt is obtained in the same manner as in the example to which the formulation of the coating liquid for forming the surface layer is applied, except for the above.

### (Evaluation of Characteristics, Evaluation of Contamination of Back Surface of Paper, and Evaluation of Electrostatic Offset)

In a case where the evaluation of characteristics, the evaluation of the contamination of the back surface of the paper, and the evaluation of the electrostatic offset of the electrophotographic member of each of Examples are evaluated, the same evaluation results as in Example 1 are obtained.

### (Coating Defects of Surface Layer)

Coating defects of the surface layer of the electrophotographic member of each of Examples is evaluated as follows.

### -Spiral trace-

A surface of the surface layer is visually observed and evaluated according to the following standard.
A: no spiral trace is visible.
B: spiral trace is slightly visible.

### -Drip-

A film thickness difference Δ of the surface layer at a position 40 mm inward in the axial direction from both end parts is measured and evaluated according to the following standard.
A: film thickness difference Δ is 0 µm or more and 5 µm or less.
B: film thickness difference Δ is more than 5 µm and 10 µm or less.

### -Surface roughness-

A surface of the surface layer is visually observed and evaluated according to the following standard.
A: no roughness in the pear skin is visible.
B: roughness in the pear skin is slightly visible.

### -Coating streaks-

A surface of the surface layer is visually observed and evaluated according to the following standard.
A: no coating streaks are visible.
B: coating streaks are slightly visible.

**[Table 2]**

| | Coating method | Evaluation result | | | |
|---|---|---|---|---|---|
| | | Spiral trace | Drip | Surface roughness | Coating streaks |
| Examples 101 | Blade coating method | B | A | A | A |
| Examples 102 | Dip coating method | A | B | A | A |
| Examples 103 | Spray coating method | A | A | B | A |
| Examples 104 | Ring coating method | A | B | A | A |
| Examples 105 | Brush coating method | A | A | A | B |

From the above results, it is found that, in a case where the surface layer is formed by the blade coating method, the dip coating method, the spray coating method, the ring coating method, or the brush coating method using the coating liquid having the formulation of the surface layer of the present example, a surface layer (that is, a film) having reduced coating defects can be formed.

The present exemplary embodiments include the following aspects.
(((1))) A film comprising:
   a conductive material; and
   a polysiloxane compound that has a T unit represented by a formula: [R¹SiO_{3/2}]ₘ (in the formula, R¹ represents an organic group, m represents an integer of 2 or more, and at least one R¹ among a plurality of R¹'s present in the T unit is a group including at least one of an alkyl group or an aryl group),
   wherein a surface resistivity is 1.0 × 10³ Ω/sq or more and 1.0 × 10⁸ Ω/sq or less.
(((2))) The film according to (((1))),
   wherein a water contact angle of a surface is 90° or more.
(((3))) The film according to (((1))) or (((2))),
   wherein the conductive material is at least one selected from the group consisting of carbon black, an ion conductive material, and graphite.
(((4))) The film according to (((3))),
   wherein the conductive material is the carbon black, and
   a content of the carbon black with respect to the polysiloxane compound is 0.5% by mass or more and 30% by mass or less.
(((5))) The film according to (((3))) or (((4))),
   wherein the conductive material is carbon black having a pH of 6.0 or more and 10.0 or less.
(((6))) A member comprising:
   a resin base material; and
   a surface layer that is provided on the resin base material and consists of the film according to any one of (((1))) to (((5))).
(((7))) A fixing device comprising:
   a heating member; and
   a pressurizing member disposed in contact with an outer surface of the heating member,
   wherein the pressurizing member is configured by an endless belt consisting of the member according to (((6))).
(((8))) An image forming apparatus comprising:
   an image holder;
   a charging device that charges a surface of the image holder;
   an electrostatic latent image forming device that forms an electrostatic latent image on the charged surface of the image holder;
   a developing device that accommodates a developer containing a toner and develops the electrostatic latent image formed on the surface of the image holder with the developer to form a toner image;
   a transfer device that transfers the toner image onto a surface of a recording medium; and
   the fixing device according to (((7))), that fixes the toner image on the surface of the recording medium.
(((9))) A method of forming the film according to any one of (((1))) to (((5))),
   wherein the film is formed by a blade coating method.
(((10))) A method of forming the film according to any one of (((1))) to (((5))),
   wherein the film is formed by a dip coating method.
(((11))) A method of forming the film according to any one of (((1))) to (((5))),
   wherein the film is formed by a spray coating method.
(((12))) A method of forming the film according to any one of (((1))) to (((5))),
   wherein the film is formed by a ring coating method.
(((13))) A method of forming the film according to any one of (((1))) to (((5))),
   wherein the film is formed by a brush coating method.

The effects of the above-described aspects are as follows.

According to (((1))), there is provided a film that has low electrostatic adhesiveness and low physical adhesiveness as compared with a case where, in the film containing a conductive material and a polysiloxane compound having a T unit represented by the above formula: [R¹SiO_{3/2}]ₘ, the surface resistivity is less than 1.0 × 10³ Ω/sq or more than 1.0 × 10⁸ Ω/sq.

According to (((2))), there is provided a film that has low electrostatic adhesiveness and low physical adhesiveness as compared with a case where the water contact angle of the surface is less than 90°.

According to (((3))), there is provided a film containing, as the conductive material, at least one selected from the group consisting of carbon black, an ion conductive material, and graphite, in which the film has low electrostatic adhesiveness and low physical adhesiveness as compared with a case where a surface resistivity is less than 1.0 × 10³ Ω/sq or more than 1.0 × 10⁸ Ω/sq.

According to (((4))), there is provided a film that has low electrostatic adhesiveness and low physical adhesiveness as compared with a case where the content of the carbon black with respect to the polysiloxane compound is less than 0.5% by mass or more than 30% by mass.

According to (((5))), there is provided a film that has low electrostatic adhesiveness and low physical adhesiveness as compared with a case where the conductive material is an ion conductive material or graphite.

According to (((6))), there is provided a member that employs a film containing a conductive material and a polysiloxane compound having a T unit represented by the above formula: [R¹SiO_{3/2}]ₘ, in which the film has low electrostatic adhesiveness and low physical adhesiveness as compared with a case where the surface resistivity is less than 1.0 × 10³ Ω/sq or more than 1.0 × 10⁸ Ω/sq.

According to (((7))) or (((8))), there is provided a fixing device or an image forming apparatus, that can suppress electrostatic offset and contamination of a back surface of a recording medium when a film containing a conductive material and a polysiloxane compound having a T unit represented by the above formula: [R¹SiO_{3/2}]ₘ is employed, in which the film has low electrostatic adhesiveness and low physical adhesiveness as compared with a case where the surface resistivity is less than 1.0 × 10³ Ω/sq or more than 1.0 × 10⁸ Ω/sq.

According to (((9))), (((10))), (((11))), (((12))), or (((13))), there is provided a method of forming a film having low electrostatic adhesiveness and low physical adhesiveness and reducing coating defects by a blade coating method, a dip coating method, a spray coating method, a ring coating method, or a brush coating method.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

60: fixing device
62: pressure belt
63: belt traveling guide
64: pressing pad
64a: front sandwiching member
64b: peeling sandwiching member
65: holding member
66: halogen lamp
68: sliding member
69: temperature-sensitive element
70: peeling member
71: peeling claw
72: holding member
100: image forming apparatus

## Claims

1. A film comprising:
a conductive material; and
a polysiloxane compound that has a T unit represented by a formula: [R¹SiO_{3/2}]ₘ (in the formula, R¹ represents an organic group, m represents an integer of 2 or more, and at least one R¹ among a plurality of R¹'s present in the T unit is a group including at least one of an alkyl group or an aryl group),
wherein a surface resistivity is 1.0 × 10³ Ω/sq or more and 1.0 × 10⁸ Ω/sq or less.

2. The film according to claim 1,
wherein a water contact angle of a surface is 90° or more.

3. The film according to claim 1 or 2,
wherein the conductive material is at least one selected from the group consisting of carbon black, an ion conductive material, and graphite.

4. The film according to claim 3,
wherein the conductive material is the carbon black, and
a content of the carbon black with respect to the polysiloxane compound is 0.5% by mass or more and 30% by mass or less.

5. The film according to claim 3 or 4,
wherein the conductive material is carbon black having a pH of 6.0 or more and 10.0 or less.

6. A member comprising:
a resin base material; and
a surface layer that is provided on the resin base material and consists of the film according to any one of claims 1 to 5.

7. A fixing device comprising:
a heating member; and
a pressurizing member disposed in contact with an outer surface of the heating member,
wherein the pressurizing member is configured by an endless belt consisting of the member according to claim 6.

8. An image forming apparatus comprising:
an image holder;
a charging device that charges a surface of the image holder;
an electrostatic latent image forming device that forms an electrostatic latent image on the charged surface of the image holder;
a developing device that accommodates a developer containing a toner and develops the electrostatic latent image formed on the surface of the image holder with the developer to form a toner image;
a transfer device that transfers the toner image onto a surface of a recording medium; and
the fixing device according to claim 7, that fixes the toner image on the surface of the recording medium.

9. A method of forming the film according to any one of claims 1 to 5,
wherein the film is formed by a blade coating method.

10. A method of forming the film according to any one of claims 1 to 5,
wherein the film is formed by a dip coating method.

11. A method of forming the film according to any one of claims 1 to 5,
wherein the film is formed by a spray coating method.

12. A method of forming the film according to any one of claims 1 to 5,
wherein the film is formed by a ring coating method.

13. A method of forming the film according to any one of claims 1 to 5,
wherein the film is formed by a brush coating method.
